# EUROPÄISCHE PATENTSCHRIFT

(11) **EP 4 505 861 B1**
(45) Veröffentlichungstag und Bekanntmachung des Hinweises auf die Patenterteilung: **08.04.2026**
(21) Anmeldenummer: 24182826.8
(22) Anmeldetag: 18.06.2024
(51) Int. Cl.: A01D 45/02, A01D 67/00

(54) **VORSATZGERÄT FÜR EINEN SELBSTFAHRENDEN MÄHDRESCHER**
HEADER FOR A SELF-PROPELLED COMBINE HARVESTER
TÊTE DE RÉCOLTE POUR MOISSONNEUSE-BATTEUSE AUTOMOTRICE

(30) Priorität: 10.08.2023 DE 102023121460
(43) Veröffentlichungstag der Anmeldung: 12.02.2025
(73) Patentinhaber: CLAAS Selbstfahrende Erntemaschinen GmbH, 33428 Harsewinkel (DE)
(72) Erfinder: Brand, Andreas, 33428 Marienfeld (DE); Brinkmann, Daniel, 49545 Tecklenburg (DE); Herter, Felix, 88239 Wangen (DE); Lamfalusi, Csaba, 5008 Szolnok (HU)
(74) Vertreter: CLAAS Gruppe

(56) Entgegenhaltungen:
- DE-A1- 3 029 424
- US-A1- 2014 325 948
- US-A1- 2018 317 389
- US-B2- 9 844 180

## Beschreibung

Die vorliegende Anmeldung betrifft ein Vorsatzgerät für einen selbstfahrenden Mähdrescher gemäß dem Oberbegriff von Anspruch 1. Ferner betrifft die vorliegende Anmeldung einen selbstfahrenden Mähdrescher gemäß dem Oberbegriff von Anspruch 12.

Das Vorsatzgerät ist dazu vorgesehen und eingerichtet, Maispflanzen zu ernten. Zu diesem Zweck umfasst es einen Rahmen, mindestens eine Ernteeinrichtung zur Ernte von Maiskolben der Maispflanzen sowie einen Querförderer, der in aller Regel mit gegenläufigen Förderabschnitten versehen ist. Typischerweise umfasst das Vorsatzgerät eine Mehrzahl von Ernteeinrichtungen, die in Breitenrichtung des Vorsatzgeräts betrachtet nebeneinander in einer Reihe angeordnet sind. Die mindestens eine Ernteeinrichtung ist an dem Rahmen gelagert, sodass sowohl ein Eigengewicht der Ernteeinrichtung als auch Betriebskräfte an den Rahmen ableitbar sind. Der Querförderer dient dazu, die geernteten Maiskolben in Breitenrichtung des Vorsatzgeräts mittig zusammenzuführen, sodass die Maiskolben an einen mittig an das Vorsatzgerät angeschlossenen Schrägförderer übergeben werden können.

Für die Ernte der Maiskolben von den Maispflanzen umfasst die Ernteeinrichtung eine Einzugseinheit sowie eine Pflückeinheit. Die Einzugseinheit dient dazu, die Maispflanzen geordnet einzuziehen sowie Maiskolben, die mittels der Pflückeinheit gepflückt wurden, zu dem Querförderer bzw. einem dem Querförderer zugeordneten Förderkanal zu transportieren. Die Pflückeinheit umfasst zwei Pflückwalzen, die parallel zueinander sowie nebeneinander angeordnet sind. Die Pflückwalzen werden bei einem Betrieb der Ernteeinrichtung typischerweise gegenläufig drehangetrieben und begrenzen gemeinsam einen Arbeitsspalt. Die Maispflanzen werden in diesen Arbeitsspalt geführt und dort mittels der Pflückwalzen erfasst. In dem Arbeitspalt werden die Pflanzen infolge der Rotation der Pflückwalzen durch den Arbeitsspalt nach unten gezogen und können dabei mittels der Pflückwalzen zertrennt werden. Die ausgehend von einem Pflanzenstängel einer jeweiligen Maispflanze radial vorstehenden Maiskolben geraten dabei nicht in den Arbeitsspalt, sondern werden oberhalb des Arbeitsspalts abgeschieden bzw. "gepflückt" und sodann mittels der Einzugseinheit weiter in Richtung des Querförderers befördert.

Wie vorstehend bereits dargelegt, ist die mindestens eine Ernteeinrichtung an dem Rahmen des Vorsatzgeräts gelagert. Hierzu ist die Ernteeinrichtung an einer Anbindungsstelle an den Rahmen angebunden. Dies kann beispielsweise in Form einer Klemmverbindung erfolgen, wobei beispielsweise ein Rahmenprofil des Rahmens einen beispielsweise rechteckigen Querschnitt aufweist, an dem die Ernteeinrichtung an der Anbindungsstelle angebunden ist. Hierfür kann die Ernteeinrichtung beispielsweise über zwei Bolzen verfügen, von denen sich jeweils eine an einer Seite des Rahmenprofils erstreckt und die gemeinsam mit einem hinter dem Rahmenprofil angeordneten Klemmstab zusammenwirken. Auf diese Weise umgreifen die beiden Bolzen und der Klemmstab gemeinsam das Rahmenprofil, wobei aufgrund der eckigen Ausgestaltung des letzteren neben der Abtragung von vertikalen und horizontalen Lagerkräften ferner eine Übertragung eines Lagermoments möglich ist. Auf diese Weise kann die Ernteeinrichtung gegenüber dem Rahmen in Fahrtrichtung des Mähdreschers betrachtet nach vorne auskragen und sich dabei zumindest im Wesentlichen vollständig diesseits des Rahmenprofils befinden.

Der selbstfahrenden Mähdrescher umfasst ein Vorsatzgerät, das zur Ernte von Maispflanzen eingerichtet ist. Auf diese Weise ist der Mähdrescher dazu geeignet, an Maiskolben der Maispflanzen befindliche Maiskörner zu ernten. Hierfür umfasst der Mähdrescher neben dem Vorsatzgerät ferner eine Mehrzahl von Arbeitsorganen, mittels derer die von den Maispflanzen gepflückten Maiskolben in an sich bekannter Weise verarbeitet werden können.

Vorsatzgeräte der vorstehend beschriebenen Art sind im Stand der Technik bereits bekannt. Beispielsweise offenbart die DE 30 29 424 A1 ein Vorsatzgerät mit einem rechteckförmigen Rahmenprofil, an dem die Ernteeinrichtungen jeweils mittels zwei mehrteiligen Klemmverbindungen befestigt sind.

Das Dokument US 2018/0317389 A1 offenbart ein Gerät zum Ernten von stangenförmigen Stängelfrüchten.

Die bekannten Konstruktionen haben den Nachteil, dass das jeweilige Rahmenprofil, an das die mindestens eine Ernteeinrichtung angebunden ist, dazu geeignet sein muss, neben den Lagerkräften ferner ein Lagermoment aufzunehmen. Dies führt dazu, dass das Rahmenprofil einen gewissen Mindestquerschnitt aufweisen muss, um die einwirkenden Kräfte bzw. Drehmomente alleine aufnehmen und in ein übergeordnetes Rahmenprofilen ableiten zu können. Die Ausgestaltung des Rahmenprofils mit einem vergleichsweise großen Querschnitt steht jedoch in Konkurrenz zu dem Querförderer und anderen Bauteilen des Vorsatzgeräts, die sich ebenso wie die Anbindungsstelle der jeweiligen Ernteeinrichtung an einem hinteren Ende der Ernteeinrichtung befinden. Entsprechend ist der Bauraum an dem hinteren Ende der Ernteeinrichtung knapp, was konstruktiv regelmäßig zu Problemen führt.

Nach alldem besteht die Aufgabe der vorliegenden Anmeldung darin, ein Vorsatzgerät bereitzustellen, die im Stand der Technik bestehenden Bauraumprobleme im Bereich des rückwärtigen Endes der mindestens eine Ernteeinrichtung zumindest zu verbessern.

Die zugrunde liegende Aufgabe wird erfindungsgemäß mittels eines Vorsatzgeräts mit den Merkmalen des Anspruchs 1 gelöst. Vorteilhafte Ausgestaltungen ergeben sich aus den zugehörigen Unteransprüchen.

Bei dem erfindungsgemäßen Vorsatzgerät ist die mindestens eine Ernteeinrichtung zusätzlich zu ihrer Anbindung an den Rahmen mittelbar oder unmittelbar an dem Rahmen abgestützt ist. Für die Lagerung der Ernteeinrichtung an dem Rahmen des Vorsatzgeräts stehen entsprechend zwei Möglichkeiten zur Kraftableitung zur Verfügung, nämlich zum einen die Anbindung und zum anderen die Abstützung. Hierdurch ist die Möglichkeit geschaffen, insbesondere ein Lagermoment unter Ausbildung eines Kräftepaares in den Rahmen abzuleiten, wobei bevorzugt zwischen den Lagerkräften, die bei der Anbindung und bei der Abstützung übertragen werden, ein Hebelarm besteht, sodass mittels der Lagerkräfte ein Lagermoment besonders einfach aufgenommen werden kann. Zudem ist der Betrag der bei der Anbindung und bei der Abstützung jeweils für sich wirkenden Kräfte im Vergleich zum Stand der Technik, bei dem sämtliche Lagerkräfte an der einen Anbindungsstelle abgeleitet werden mussten, reduziert.

Nach alldem hat das erfindungsgemäße Vorsatzgerät den besonderen Vorteil, dass die Ableitung der Lagerkräfte und des Lagermoments aufgeteilt ist, sodass an der Anbindungsstelle im Vergleich zum Stand der Technik betragsmäßig geringere Kräfte übertragen werden und von dem Rahmenprofil abgeleitet werden müssen. Dies eröffnet die Möglichkeit, das Rahmenprofil, an dem sich die Anbindungsstelle befindet, im Vergleich zum Stand der Technik schlanker, das heißt insbesondere mit einem kleineren Querschnitt, auszubilden. Dies hat zur Folge, dass das Rahmenprofil ein geringeres Volumen einnimmt und folglich weniger Bauraum beansprucht als im Stand der Technik. Hierdurch ist das Vorsatzgerät konstruktiv einfacher zu gestalten, wobei aufgrund der größeren Freiheit im Bauraum auch eine bessere Handhabung möglich ist, insbesondere bei Wartungsarbeiten.

In einer besonders vorteilhaften Ausgestaltung des Vorsatzgeräts erfolgt die Abstützung der mindestens einen Ernteeinrichtung an dem Rahmen an einer Abstützstelle, die von der Anbindungsstelle der Anbindung verschieden ist. Mit anderen Worten werden die bei der Anbindung der Ernteeinrichtung an den Rahmen übertragenen Kräfte an einer anderen Stelle ("Anbindungsstelle") in den Rahmen eingeleitet als bei der Abstützung ("Abstützstelle"). Hieraus ergibt sich unter anderem der vorstehend bereits dargelegte Vorteil, dass die Abtragung eines Lagermoments, das von der Ernteeinrichtung auf den Rahmen abgeleitet wird, vereinfacht wird. Dabei gilt, dass die an der Abstützstelle und an der Anbindungsstelle wirkenden Lagerkräfte zur Ableitung des Lagermoments umso geringer sind, desto größer ein Abstand - und mithin ein effektiver Hebelarm - zwischen der Anbindungsstelle und der Abstützstelle ist.

Entsprechend kann es besonders vorteilhaft sein, wenn die Abstützstelle und die Anbindungsstelle in einem senkrecht zu der Breitenrichtung des Vorsatzgeräts geführten Vertikalschnitt betrachtet voneinander beabstandet sind, und zwar in vertikale Richtung und/oder in horizontale Richtung. Ein effektiver Abstand zwischen der Abstützstelle und der Anbindungsstelle, der einer kürzesten Distanz der Abstützstelle von der Anbindungsstelle in dem genannten Vertikalschnitt entspricht, beträgt bevorzugt mindestens 20 cm, vorzugsweise mindestens 30 cm, weiter vorzugsweise mindestens 40 cm. Ein solcher Abstand erlaubt die Dimensionierung des Rahmens an der Anbindungsstelle mit vergleichsweise kleinen Abmessungen des Querschnitts des jeweiligen Rahmenprofils, sodass besonders viel Bauraum gegenüber dem Stand der Technik gespart wird. Bevorzugt ist die Abstützstelle insbesondere in horizontale Richtung gegenüber der Anbindungsstelle in Längsrichtung des Vorsatzgeräts nach hinten verlagert, da dort typischerweise genügend Bauraum zur Verfügung steht, um beispielsweise ein zusätzliches Rahmenprofil anzuordnen, an dem die Abstützstelle ausgebildet sein kann.

Bei dem Vorsatzgerät umfasst der Rahmen ein erstes Rahmenprofil und ein zweites Rahmenprofil. Eines der Rahmenprofile oder beide Rahmenprofile können sich insbesondere parallel zu der Breitenrichtung des Vorsatzgeräts erstrecken. Bevorzugt sind die beiden Rahmenprofile parallel zueinander orientiert und voneinander beabstandet angeordnet. Ferner kann eines der Rahmenprofile oder beide Rahmenprofile einen eckigen oder runden Querschnitt aufweisen, beispielsweise von einem eckigen oder runden Rohrprofil gebildet sein. Bevorzugt weist eines der Rahmenprofile einen eckigen und das andere Rahmenprofil einen runden Querschnitt auf. Bevorzugt ist zumindest dasjenige Rahmenprofil mit einem eckigen Querschnitt ausgebildet, das in einem größeren Abstand von der mindestens einen Ernteeinrichtung angeordnet ist als das andere Rahmenprofil.

Vorzugsweise ist die Anbindungsstelle der mindestens einen Ernteeinrichtung an dem ersten Rahmenprofil angeordnet. In besonders bevorzugter Weise ist zudem die Abstützstelle, an der sich die mindestens eine Ernteeinrichtung an dem Rahmen abstützt, an dem zweiten Rahmenprofil angeordnet. Mittels der Ausgestaltung des Rahmens mit zwei Rahmenprofilen ist die Anwendung und Abstützung der mindestens einen Ernteeinrichtung an dem Rahmen an voneinander verschiedenen Stellen (Anbindungsstelle und Abstützstelle) besonders einfach umsetzbar. Hierbei können die beiden Rahmenprofile in der beschriebenen Weise beabstandet voneinander angeordnet sein, sodass in der gleichfalls bereits beschriebenen Weise an der Abstützstelle und an der Anbindungsstelle Lagerkräfte in den Rahmen abgeleitet werden können, die einen Hebelarm zueinander aufweisen.

Erfindungsgemäß weist der Rahmen des Vorsatzgeräts zusätzlich zu dem ersten Rahmenprofil und dem zweiten Rahmenprofil mindestens ein Verbindungsprofil auf, das mit beiden Rahmenprofilen verbunden ist. Beispielsweise kann sich das Verbindungsprofil in eine Richtung senkrecht zu zueinander parallelen Längsachsen der beiden Rahmenprofile erstrecken und auf diese Weise einen Abstand zwischen den beiden Rahmenprofilen überbrücken. Vorzugsweise ist das Verbindungsprofil mit mindestens einem der Rahmenprofile verschweißt und/oder monolithisch mit mindestens einem der Rahmenprofile ausgebildet. Bevorzugt ist die Ausgestaltung der Verbindung des Verbindungsprofils mit den beiden Rahmenprofilen bei beiden Rahmenprofilen gleich.

Das Verbindungsprofil hat den besonderen Vorteil, dass es den Rahmen versteift, sodass Kräfte mittels des Verbindungsprofils zwischen den Rahmenprofilen übertragbar sind. Bevorzugt ist das Verbindungsprofil dabei im Bereich einer Anbindungsstelle und/oder einer Abstützstelle der mindestens einen Ernteeinrichtung angeordnet. Dies folgt der Überlegung, dass die auf die Rahmenprofile einwirkenden Kräfte an der Abstützstelle bzw. der Anbindungsstelle erwartungsgemäß am größten sind, sodass dort die Verbindung der beiden Rahmenprofile mittels des Verbindungsprofils die größten Vorteile hinsichtlich der Kraftableitung bewirken kann.

Erfindungsgemäß ist die Abstützstelle der mindestens einen Ernteeinrichtung an dem Verbindungsprofil angeordnet. Bei dieser Ausgestaltung findet eine unmittelbare Ableitung von Lagerkräften in das erste Rahmenprofil und das Verbindungsprofil statt, während das zweite Rahmenprofilen nicht unmittelbar mit der Ernteeinrichtung verbunden ist. Gleichwohl findet aufgrund der Anbindung des Verbindungsprofils an das zweite Rahmenprofil eine Ableitung der Lagerkräfte der Ernteeinrichtung in das zweite Rahmenprofil statt, sodass die vorstehend beschriebenen Vorteile erreicht werden. Der Vorteil der Anordnung der Abstützstelle an dem Verbindungsprofil besteht darin, dass das zweite Rahmenprofil in einer größeren Entfernung von der mindestens einen Ernteeinrichtung positioniert werden kann, da sich die Ernteeinrichtung nicht bis zu dem zweiten Rahmenprofil erstrecken muss, um sich dort unmittelbar an letzterem abzustützen.

Für die konstruktive Ausgestaltung der Abstützung der mindestens einen Ernteeinrichtung kann es des Weiteren besonders vorteilhaft sein, wenn diese über eine Getriebebaugruppe der Ernteeinrichtung erfolgt. Die Getriebebaugruppe weist ein Getriebe für die Einzugseinheit und/oder die Pflückeinheit auf. Die Getriebebaugruppe befindet sich typischerweise im Bereich des rückwärtigen Endes der Ernteeinrichtung und kann eine Ursache für den knappen Bauraum in diesem Bereich sein, der neben der Getriebebaugruppe typischerweise ferner von einem Rahmenprofil des Rahmens und dem Querförderer beansprucht wird. Das Gehäuse der Getriebebaugruppe ist konstruktiv ohne Weiteres dazu geeignet, die bei der Abstützung der Ernteeinrichtung wirkenden Kräfte aufzunehmen und in den Rahmen abzuleiten.

Sofern die Abstützung der mindestens einen Ernteeinrichtung in der beschriebenen Weise über die Getriebebaugruppe bzw. ein Gehäuse derselben erfolgt, ist es besonders vorteilhaft, wenn die Getriebebaugruppe als solche an ein zweites Rahmenprofil des Rahmens oder an ein Verbindungsprofil des Rahmens gemäß vorstehender Erläuterung angebunden ist. Auf diese Weise können die Lagerkräfte der mindestens einen Ernteeinrichtung besonders einfach über die Getriebebaugruppe in den Rahmen abgeleitet werden.

In besonders bevorzugter Weise weist die mindestens eine Ernteeinrichtung zur unmittelbaren Verbindung mit der Abstützstelle ein Abstützelement auf, das gelenkig an die Abstützstelle und/oder gelenkig an die übrige Ernteeinrichtung angeschlossen ist. Insbesondere kann das Abstützelement an ein Gehäuse einer vorstehend beschriebenen Getriebebaugruppe der Ernteeinrichtung angeschlossen sein. Die mindestens einseitig gelenkige Verbindung des Abstützelements hat den Vorteil, dass sich die Ernteeinrichtung zumindest innerhalb eines gewissen Bewegungsspielraums relativ zu dem Rahmen bewegen kann. Hierdurch kann die Möglichkeit geschaffen werden, eine Ausrichtung der Ernteeinrichtung relativ zu dem Rahmen des Vorsatzgeräts zu ändern.

Das Vorsatzgerät weiter ausgestaltend umfasst die mindestens eine Ernteeinrichtung eine Häckseleinheit, die unterhalb der Pflückeinheit angeordnet ist. Die Häckseleinheit ist dazu vorgesehen und eingerichtet, die infolge der gegenläufigen Rotation der zwei Pflückwalzen von der Pflückeinheit nach unten weitergegeben Pflanzenreste der Maispflanzen zu häckseln und auf diese Weise zu zerkleinern. Hierdurch ist der biologische Abbau der auf dem jeweiligen Feld zurückgelassenen Pflanzenreste einfacher möglich, sodass die in den Pflanzenresten verbliebene Nährstoffe besser von dem Boden wieder aufgenommen werden können.

Die zugrunde liegende Aufgabe wird ferner von einem Mähdrescher mit den Merkmalen des Anspruchs 12 gelöst.

Der Mähdrescher ist dadurch gekennzeichnet, dass das Vorsatzgerät gemäß der vorliegenden Erfindung ausgebildet ist. Die sich hierdurch ergebenden Vorteile sind vorstehend bereits im Zusammenhang mit dem Vorsatzgerät dargelegt.

Die Erfindung ist nachstehend anhand eines Ausführungsbeispiels, das in den Figuren dargestellt ist, näher erläutert. Es zeigt:
- Fig. 1:: Ein Querschnitt durch einen erfindungsgemäßen Mähdrescher,
- Fig. 2:: Ein Querschnitt durch ein Vorsatzgerät des Mähdreschers gemäß Figur 1,
- Fig. 3:: Eine Ansicht einer Ernteeinrichtung des Vorsatzgeräts gemäß Figur 1, die an einem Rahmen des Vorsatzgeräts gemäß Figur 1 gelagert ist,
- Fig. 4:: Eine perspektivische Ansicht der Ernteeinrichtung gemäß Figur 3,
- Fig. 5:: Ein Detail einer Lagerung der Ernteeinrichtung gemäß Figur 3 an dem Rahmen des Vorsatzgeräts,
- Fig. 6:: Eine alternative Ausgestaltung der Lagerung gemäß Figur 4.

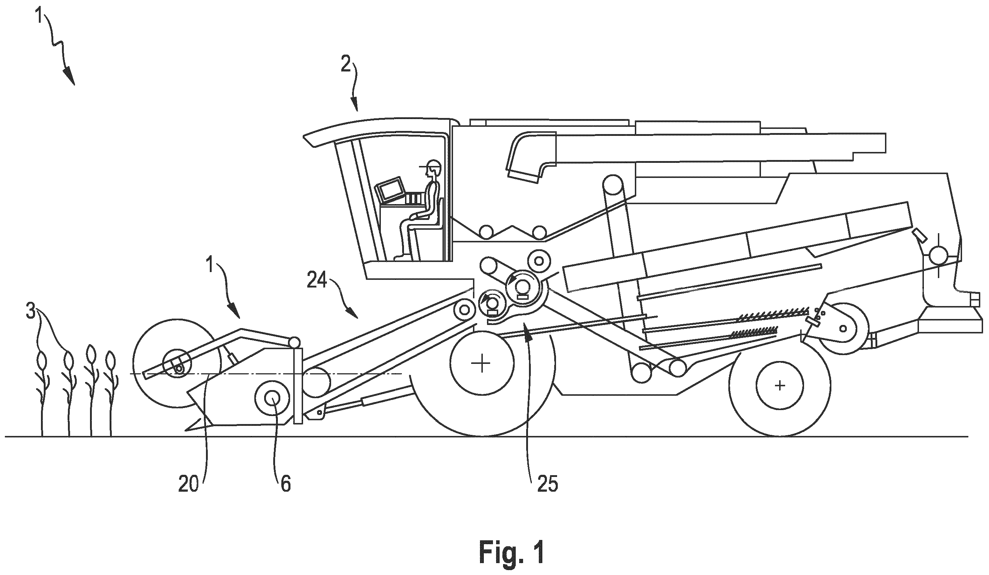

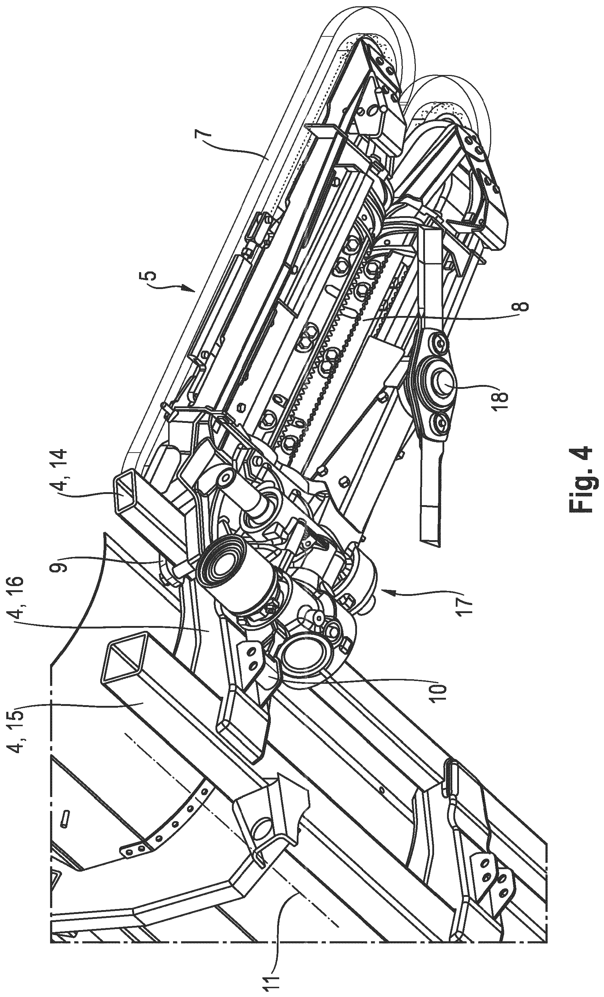

Ein Ausführungsbeispiel, das in den Figuren 1 bis 6 dargestellt ist, umfasst einen erfindungsgemäßen Mähdrescher 2, der dazu eingerichtet ist, Maispflanzen 3 zu ernten. Zu diesem Zweck umfasst der Mähdrescher 2 ein erfindungsgemäßes Vorsatzgerät 1, das an einem in Fahrtrichtung 19 betrachtet vorderen Ende des Mähdreschers 2 angeordnet ist. Insbesondere kann das Vorsatzgerät 1 an einem Schrägförderer 24 des Mähdreschers 2 aufgehängt sein. Letzterer ist dazu vorgesehen und eingerichtet, mittels des Vorsatzgeräts 1 von den Maispflanzen 3 gepflückte Maiskolben in Richtung einer Drescheinrichtung 25 zu fördern, mittels derer die Maiskolben weiterverarbeitet werden können. Der Mähdrescher 2 umfasst im Übrigen weitere Arbeitsorgane, die an sich bekannt sind und hier keiner weiteren Erläuterung bedürfen.

Das Vorsatzgerät 1 umfasst in dem gezeigten Beispiel eine Mehrzahl von Ernteeinrichtungen 5, die in Breitenrichtung 11 des Vorsatzgeräts 1 betrachtet nebeneinander in Reihe angeordnet sind. Die Ernteeinrichtungen 5 umfassen jeweils eine Einzugseinheit 7, die ein umlaufendes Förderband umfasst. An dem Förderband sind vorstehende Nocken angeordnet, mittels derer Maispflanzen 3 im Zuge der Fahrt des Mähdreschers 2 erfasst und in Richtung einer Pflückeinheit 8 der jeweiligen Ernteeinrichtung 5 eingezogen werden. Die Pflückeinheiten 8 umfassen jeweils zwei Pflückwalzen, die parallel zueinander ausgerichtet sind und gemeinsam einen Arbeitsspalt begrenzen. Während eines Betriebs des Vorsatzgeräts 1 werden die Pflückwalzen in einander entgegengesetztem Drehsinn drehangetrieben, sodass sie eine jeweilige Maispflanze 3 erfassen und in Zusammenwirkung durch den Arbeitsspalt nach unten ziehen. Da die Maiskolben ausgehend von einem Pflanzenstängel der jeweiligen Maispflanze 3 in radiale Richtung vorstehen, werden die Maiskolben im Zuge dieses Vorgangs an den Pflückwalzen der Pflückeinrichtung 8 von dem Pflanzenstängel abgeschieden und mittels der Einzugseinheit 7 in Richtung eines Querförderers 6 transportiert. Unterhalb der Pflückeinheit 8 verfügen die Ernteeinrichtungen 5 ferner über eine Häckseleinheit 18, die ein drehantreibbares Messer umfasst. Hierdurch ist die Häckseleinheit 18 dazu geeignet, die mittels der Pflückwalzen nach unten abgeschiedenen Pflanzenstängel der Maispflanzen 3 zu häckseln, bevor sie auf dem jeweiligen Feld abgelegt werden.

Der Querförderer 6 erstreckt sich in Breitenrichtung 11 des Vorsatzgeräts 1 und umfasst zwei gegenläufige Förderabschnitte. Diese können insbesondere in Form von Schneckenwindungen ausgebildet sein, wobei der Querförderer 6 infolge der gegenläufigen Ausgestaltung der Förderabschnitte dazu geeignet ist, die mittels der Ernteeinrichtungen 5 in einen Förderkanal des Querförderers 6 transportierten Maiskolben in einem Mittelbereich des Vorsatzgeräts 1 zusammenzuführen. Von dort ausgehend werden die Maiskolben an den nachgeschalteten Schrägförderer 24 übergeben und mittels letzterem weiter transportiert.

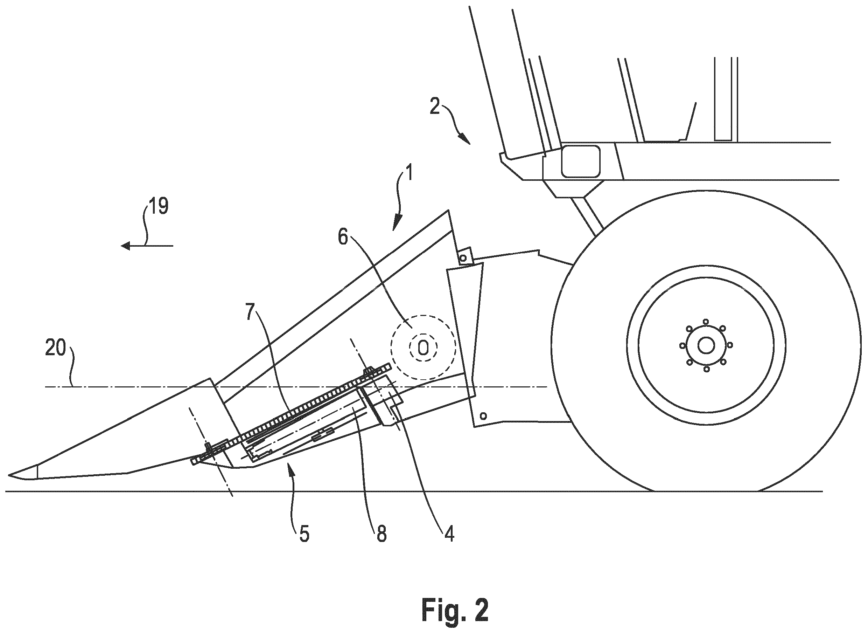

Die Ernteeinrichtungen 5 sind jeweils an einen Rahmen 4 des Vorsatzgeräts 1 angebunden. Das heißt, dass Lagerkräfte und Betriebskräfte einer jeden Ernteeinrichtung 5 in den Rahmen 4 des Vorsatzgeräts 1 abgeleitet werden. Von dem Vorsatzgerät 1 können solche Kräfte sowie weitere Kräfte beispielsweise in den Schrägförderer 24 und von letzterem in einen Hauptrahmen des Mähdreschers 2 abgeleitet werden. Wie sich besonders gut anhand von Figur 2 ergibt, erstrecken sich die Ernteeinrichtungen 5 ausgehend von dem Rahmen 4 in Fahrtrichtung 19 des Mähdreschers 2 bzw. in Längsrichtung 20 des Vorsatzgeräts 1 nach vorne. Mit anderen Worten kragen die Ernteeinrichtungen 5 ausgehend von dem Rahmen 4 nach vorne aus, sodass an dem Rahmen 4 neben vertikalen und gegebenenfalls horizontalen Lagerkräften insbesondere ein Lagermoment übertragen wird und entsprechend aufgenommen werden muss. Insbesondere weist eine Wirkungsachse einer Gewichtskraft einer jeweiligen Ernteeinrichtung 5 gegenüber dem Rahmen 4 einen Hebelarm auf, der das Lagermoment der Ernteeinrichtung 5 bedingt.

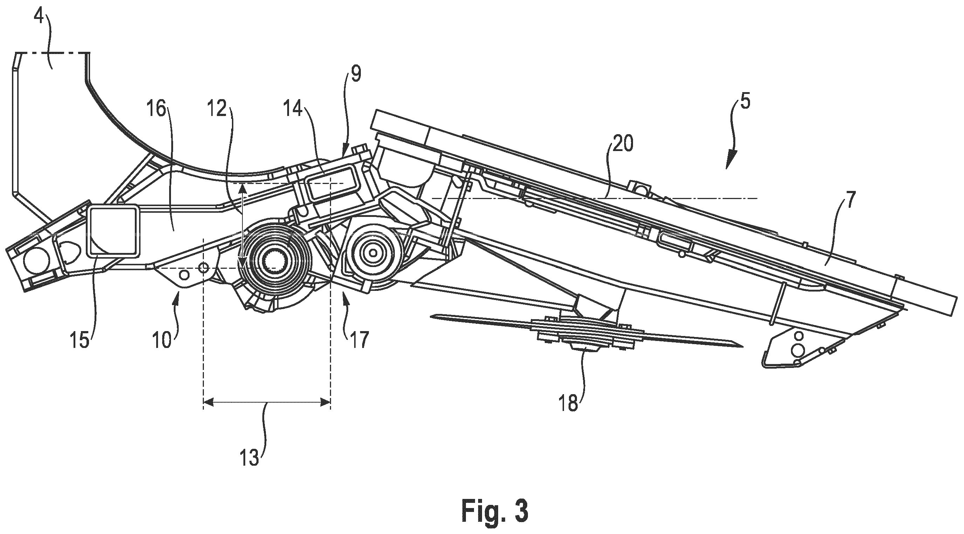

Um die Lagerkräfte und das Lagermoment aufzunehmen, umfasst der Rahmen 4 dem gezeigten Beispiel zwei Rahmenprofile 14, 15 sowie eine Mehrzahl von Verbindungsprofilen 16. Dies ergibt sich besonders gut anhand der Figuren 3 bis 5 . Die Ernteeinrichtungen 5 sind dabei jeweils sowohl an einer Anbindungsstelle 9 als auch an einer von der Anbindungsstelle 9 verschiedenen Abstützstelle 10 an dem Rahmen 4 angebunden bzw. abgestützt.

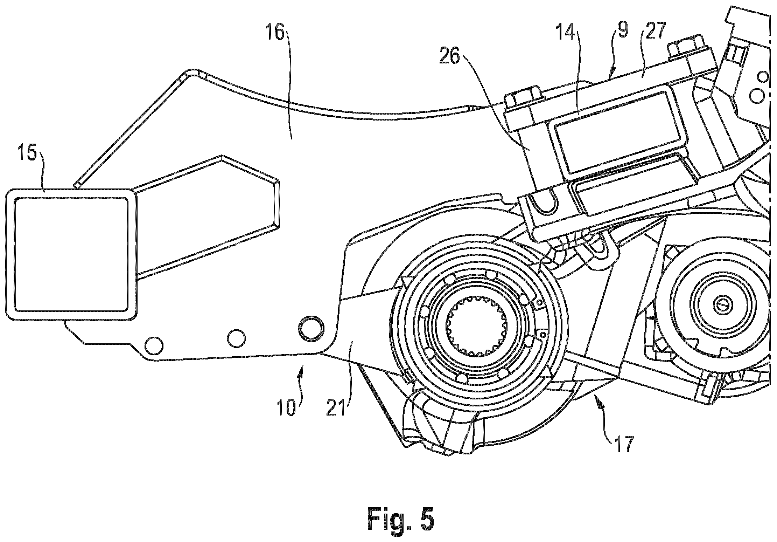

Die Anbindungsstelle 9 ist an dem ersten Rahmenprofil 14 angeordnet, das in dem gezeigten Beispiel von einem rechteckigen Vierkantrohr gebildet ist. Das erste Rahmenprofil 14 erstreckt sich in Breitenrichtung 11 des Vorsatzgerätes 1. Die Kraft übertragende Verbindung zwischen einer jeweiligen Ernteeinrichtung 5 und dem ersten Rahmenprofil 14 ist in dem gezeigten Beispiel mittels einer Klemmverbindung hergestellt, wobei die Ernteeinrichtung 5 das erste Rahmenprofil 14 seitlich mittels zweier Bolzen 26 umgreift und an einer abgewandten Seite des ersten Rahmenprofils 14 ein Klemmstab 27 aufweist, das gegen das erste Rahmenprofil 14 geklemmt ist. Dies ergibt sich besonders gut anhand von Figur 5 .

Das zweite Rahmenprofil 15 ist ebenfalls von einem rechteckigen Vierkantrohr gebildet, wobei sich das zweite Rahmenprofil 15 parallel zu dem ersten Rahmenprofil 14 erstreckt. Die beiden Rahmenprofile 14, 15 sind in dem gezeigten Beispiel mittels der Mehrzahl von Verbindungsprofilen 16 miteinander verbunden, wobei die Verbindungsprofile 16 in Breitenrichtung 11 des Vorsatzgeräts 1 betrachtet in Reihe beabstandet voneinander angeordnet sind und dabei einen Abstand zwischen dem ersten Rahmenprofil 14 und dem zweiten Rahmenprofil 15 überbrücken. In dem gezeigten Beispiel sind die Verbindungsprofilen 16 jeweils mit dem ersten Rahmenprofil 14 und dem zweiten Rahmenprofil 15 verschweißt. Auf diese Weise sind die Verbindungsprofilen 16 dazu geeignet, Kräfte in die beiden Rahmenprofile 14, 15 abzuleiten.

Wie vorstehend dargelegt, ist eine jeweilige Ernteeinrichtung 5 zusätzlich zu der Anbindungsstelle 9 an einer Abstützstelle 10 an dem Rahmen 4 abgestützt. Die Abstützstelle 10 ist beabstandet von der Anbindungsstelle 9 angeordnet, wobei die Abstützstelle 10 hier an dem Verbindungsprofil 16 angeordnet ist. In dem in Figur 3 dargestellten Vertikalschnitt betrachtet weist die Abstützstelle 10 relativ zu der Anbindungsstelle 9 sowohl einen vertikalen Abstand 12 als auch einen horizontalen Abstand 13 auf. Abstand 12 beträgt in dem gezeigten Beispiel ca. 30 cm, Abstand 13 ca. 40 cm. Entsprechend können Kräfte von der jeweiligen Ernteeinrichtung 5 sowohl an der Anbindungsstelle 9 als auch an der Abstützstelle 10 in den Rahmen 4 abgeleitet werden. Da diese beiden Stellen 9, 10 voneinander beabstandet sind, sind sie in Zusammenwirkung besonders gut dazu geeignet, Lagermomente der Ernteeinrichtung 5 aufzunehmen. Hierdurch ergibt sich der beschriebene Vorteil, dass das erste Rahmenprofil 14 kleiner dimensioniert werden kann als dies im Stand der Technik üblich ist. In Anbetracht des engen Bauraums im Bereich des rückwärtigen Endes der jeweiligen Ernteeinrichtung 5 ist dies besonders vorteilhaft.

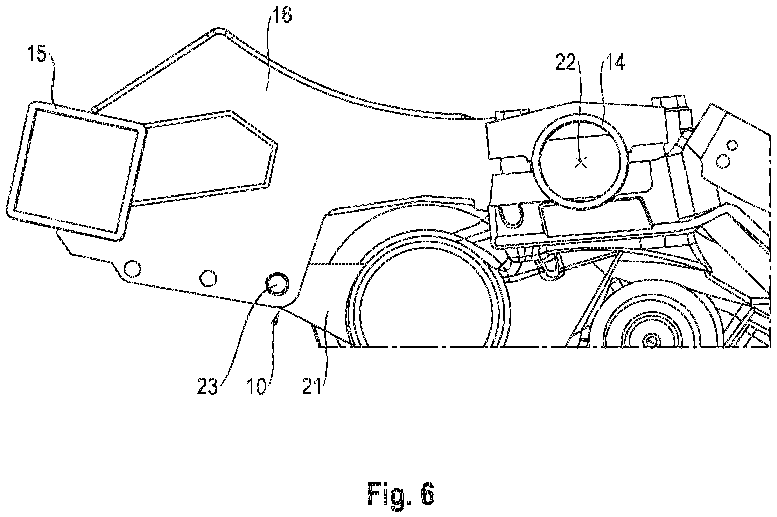

Die Ernteeinrichtungen 5 umfassen in dem gezeigten Beispiel jeweils eine Getriebebaugruppe 17, die sowohl ein Getriebe für die Einzugseinheit 7 als auch ein Getriebe für die Pflückeinheit 8 umfasst. Die Getriebebaugruppe 17 ist an einem rückwärtigen Ende der jeweiligen Ernteeinrichtung 5 angeordnet. In dem gezeigten Beispiel erfolgt die Abstützung der Ernteeinrichtungen 5 jeweils über die Getriebebaugruppe 17, wobei die an der Abstützstelle 10 in den Rahmen 4 eingeleiteten Kräfte über ein Gehäuse der jeweiligen Getriebebaugruppe 17 abgeleitet werden. Das Gehäuse der Getriebebaugruppe 17 ist in dem gezeigten Beispiel mittels eines Abstützelements 21 an dem Verbindungsprofil 16 angeschlossen. Dies ergibt sich besonders gut anhand der Figuren 5 und 6 .

Auf diese Weise findet die Ableitung von Kräften einer jeweiligen Ernteeinrichtung 5 sowohl an der Anbindungsstelle 9 an dem ersten Rahmenprofil 14 als auch an der Abstützstelle 10 an dem Verbindungsprofil 16 statt. Da letzteres mit dem zweiten Rahmenprofil 15 verbunden ist, findet eine Ableitung der Kräfte von dem Verbindungsprofil 16 zu dem zweiten Rahmenprofil 15 statt. Die Ernteeinrichtungen 5 sind auf diese Weise zuverlässig an dem Rahmen 4 des Vorsatzgeräts 1 gelagert, wobei aufgrund der Aufteilung der Kräfte insbesondere das erste Rahmenprofil 14 kleiner dimensioniert werden kann als im Stand der Technik üblich.

In einer vorteilhaften Ausgestaltung des Rahmens 4 weist das erste Rahmenprofil 14 abweichend von der vorstehend beschriebenen Variante nicht einen rechteckigen Querschnitt, sondern einen runden Querschnitt auf. Diese Variante ergibt sich besonders gut anhand von Figur 6 . Sie hat den Vorteil, dass die Ernteeinrichtung 5 im Bereich der Anbindungsstelle 9 um eine Drehachse 22 des ersten Rahmenprofils 14 zumindest innerhalb eines gewissen Spielraums verdreht werden kann. Dies ist ferner dadurch ermöglicht, dass die Ernteeinrichtung 5 zur Verbindung mit dem Verbindungsprofil 16 an der Abstützstelle 10 das beschriebene Abstützelement 21 verwendet, das gelenkig an dem Verbindungsprofil 16 gelagert ist. Auf diese Weise kann das Abstützelement 21 um eine Drehachse 23 gedreht werden, die an der Abstützstelle 10 ausgebildet ist. Diese Ausgestaltung erlaubt eine gewisse Einstellbarkeit eines Winkels der jeweiligen Ernteeinrichtung 5 bezogen auf eine Längsrichtung 20 des Vorsatzgeräts 1. Hierzu ist es ebenfalls denkbar, das Abstützelement 21 gegen ein alternatives Abstützelement 21 zu tauschen, dass andere Abmessungen aufweist.

## Patentansprüche

1. Vorsatzgerät (1) für einen selbstfahrenden Mähdrescher (2),
wobei das Vorsatzgerät (1) zum Ernten von Maispflanzen (3) eingerichtet ist, das Vorsatzgerät (1) umfassend
- einen Rahmen (4),
- mindestens eine Ernteeinrichtung (5) zur Ernte von Maiskolben der Maispflanzen (3),
- einen Querförderer (6),
wobei die Ernteeinrichtung (5) eine Einzugseinheit (7) sowie eine Pflückeinheit (8) mit zwei Pflückwalzen umfasst,
wobei die Ernteeinrichtung (5) an einer Anbindungsstelle (9) an den Rahmen (4) angebunden ist,
wobei sich der Querförderer (6) in Breitenrichtung (11) des Vorsatzgerät (1) erstreckt,
wobei mittels des Querförderers (6) geerntete Maiskolben in einem Mittelbereich des Vorsatzgerätes (1) zusammenführbar sind,
wobei die mindestens eine Ernteeinrichtung (5) zusätzlich zu ihrer Anbindung an den Rahmen (4) mittelbar oder unmittelbar an dem Rahmen (4) abgestützt ist,
wobei der Rahmen (4) ein erstes Rahmenprofil (14) und ein zweites Rahmenprofil (15) umfasst, wobei vorzugsweise die Anbindungsstelle (9) an dem ersten Rahmenprofil (14) angeordnet ist,
wobei die beiden Rahmenprofile (14, 15) mittels mindestens eines Verbindungsprofils (16) miteinander verbunden sind,
wobei vorzugsweise das Verbindungsprofil (16) mit beiden Rahmenprofilen (14 ,15) verschweißt und/oder monolithisch mit den beiden Rahmenprofilen (14, 15) verbunden ist;
**dadurch gekennzeichnet, dass**
eine Abstützstelle (10), an der sich die mindestens eine Ernteeinrichtung (5) am Rahmen (4) abstützt, an dem Verbindungsprofil (16) angeordnet ist.

2. Vorsatzgerät (1) nach Anspruch 1, **dadurch gekennzeichnet, dass** die Abstützung der mindestens einen Ernteeinrichtung (5) an dem Rahmen (4) an einer von der Anbindungsstelle (9) verschiedenen Abstützstelle (10) erfolgt.

3. Vorsatzgerät (1) nach Anspruch 2, **dadurch gekennzeichnet, dass** die Anbindungsstelle (9) und die Abstützstelle (10) in einem senkrecht zu der Breitenrichtung (11) des Vorsatzgeräts (1) geführten Vertikalschnitt betrachtet einen vertikal gemessenen Abstand (12) und/oder einen horizontal gemessenen Abstand (13) voneinander aufweisen.

4. Vorsatzgerät (1) nach einem der vorangegangenen Ansprüche, **dadurch gekennzeichnet, dass** die Abstützstelle (10) an dem zweiten Rahmenprofil (15) angeordnet ist.

5. Vorsatzgerät (1) nach Anspruch 4, **dadurch gekennzeichnet, dass** das zweite Rahmenprofil (15) einen rechteckigen Querschnitt aufweist.

6. Vorsatzgerät (1) nach einem der vorhergehenden Ansprüche, **dadurch gekennzeichnet, dass** ein Rahmenprofil (14) des Rahmens (4), an dem die Anbindungsstelle (9) angeordnet ist, einen rechteckigen oder runden Querschnitt aufweist.

7. Vorsatzgerät (1) nach einem der vorhergehenden Ansprüche, **dadurch gekennzeichnet, dass** die mindestens eine Ernteeinrichtung (5) eine Getriebebaugruppe (17) aufweist, die ein Getriebe für die Einzugseinheit (7) und/oder die Pflückeinheit (8) umfasst, wobei die Abstützung der mindestens einen Ernteeinrichtung (5) an dem Rahmen (4) über die Getriebebaugruppe (17) erfolgt.

8. Vorsatzgerät (1) nach einem der vorhergehenden Ansprüche, **dadurch gekennzeichnet, dass** die mindestens eine Ernteeinrichtung (5) eine Häckseleinheit (18) umfasst.

9. Selbstfahrender Mähdrescher zur Ernte von Maispflanzen, umfassend ein Vorsatzgerät (1), das zur Ernte von Maispflanzen (3) eingerichtet ist, eine Mehrzahl von Arbeitsorganen zur Verarbeitung von von den Maispflanzen (3) gepflückten Maiskolben,
**dadurch gekennzeichnet, dass**
das Vorsatzgerät (1) nach einem der Ansprüche 1 bis 8 ausgebildet ist.

## Claims

1. Attachment (1) for a self-propelled combine harvester (2), wherein the attachment (1) is configured for harvesting corn plants (3), the attachment (1) comprising
- a frame (4),
- at least one harvesting device (5) for harvesting corn cobs of corn plants (3),
- a cross conveyor (6),
wherein the harvesting device (5) comprises a draw-in unit (7) and a picking unit (8) with two picking rollers,
wherein the harvesting device (5) is attached to the frame (4) at an attachment point (9),
wherein the cross conveyor (6) extends in the width direction (11) of the attachment (1),
wherein harvested corn cobs can be brought together by means of the cross conveyor (6) in a central area of the attachment (1),
wherein the at least one harvesting device (5) is supported, in addition to its attachment to the frame (4), directly or indirectly on the frame (4), wherein the frame (4) comprises a first frame profile (14) and a second frame profile (15), wherein preferably the attachment point (9) is arranged on the first frame profile (14), wherein the two frame profiles (14, 15) are connected to each other by means of at least one connection profile (16),
wherein preferably the connection profile (16) is welded to both frame profiles (14, 15) and/or is connected monolithically to the two frame profiles (14, 15);
**characterized in that**
a support point (10), at which the at least one harvesting device (5) is supported on the frame (4), is arranged on the connection profile (16).

2. Attachment (1) according to Claim 1, **characterized in that** the support of the at least one harvesting device (5) on the frame (4) takes place at a support point (10) different from the connection point (9).

3. Attachment (1) according to Claim 2, **characterized in that** the connection point (9) and the support point (10) are at a vertically measured distance (12) and/or a horizontally measured distance (13) from each other as viewed in a vertical section guided perpendicularly with respect to the width direction (11) of the attachment (1).

4. Attachment (1) according to any one of the preceding claims, **characterized in that** the support point (10) is arranged on the second frame profile (15).

5. Attachment (1) according to Claim 4, **characterized in that** the second frame profile (15) has a rectangular cross section.

6. Attachment (1) according to any one of the preceding claims, **characterized in that** a frame profile (14) of the frame (4), on which the connection point (9) is arranged, has a rectangular or round cross section.

7. Attachment (1) according to any one of the preceding claims, **characterized in that** the at least one harvesting device (5) has a gear assembly (17) which comprises a gear unit for the draw-in unit (7) and/or the picking unit (8), wherein the support of the at least one harvesting device (5) on the frame (4) takes place via the gear assembly (17).

8. Attachment (1) according to any one of the preceding claims, **characterized in that** the at least one harvesting device (5) comprises a chopping unit (18).

9. Self-propelled combine harvester for harvesting corn plants, comprising an attachment (1) which is configured for harvesting corn plants (3), a plurality of working members for processing corn cobs picked from the corn plants (3),
**characterized in that**
the attachment (1) is designed according to any one of Claims 1 to 8.

## Revendications

1. Tête de récolte (1) destinée à une moissonneuse-batteuse (2) automotrice,
sachant que la tête de récolte (1) est agencée pour la récolte de plantes de maïs (3), la tête de récolte (1) comprenant
- un châssis (4),
- au moins un dispositif de récolte (5) pour récolter des épis de maïs des plantes de maïs (3),
- un convoyeur transversal (6)
le dispositif de récolte (5) comportant une unité d'alimentation (7) ainsi qu'une unité de cueillage (8) dotée de deux cylindres de cueillage,
le dispositif de récolte (5) étant relié au châssis (4) dans un point de liaison (9),
le convoyeur transversal (6) s'étendant dans le sens de la largeur (11) de la tête de récolte (1),
le convoyeur transversal (6) permettant de rassembler les épis de maïs récoltés dans une zone médiane de la tête de récolte (1),
le dispositif de récolte (5), au nombre d'au moins un, prenant appui indirectement ou directement sur le châssis (4), en plus de sa liaison avec le châssis (4),
le châssis (4) comportant un premier profilé de châssis (14) et un deuxième profilé de châssis (15), le point de liaison (9) étant placé de préférence sur le premier profilé de châssis (14), les deux profilés de châssis (14, 15) étant reliés l'un à l'autre à l'aide d'au moins un profilé de liaison (16),
le profilé de châssis (16) étant de préférence soudé aux deux profilés de châssis (14, 15) et/ou étant relié de façon monolithique aux deux profilés de châssis (14, 15),
**caractérisée en ce que**
un point d'appui (10), dans lequel le dispositif de récolte (5), au nombre d'au moins un, prend appui sur le châssis (4), est placé sur le profilé de liaison (16).

2. Tête de récolte (1) selon la revendication 1, **caractérisée en ce que** l'appui du dispositif de récolte (5), au nombre d'au moins un, sur le châssis (4) s'effectue dans un point d'appui (10) qui est différent du point de liaison (9).

3. Tête de récolte (1) selon la revendication 2, **caractérisée en ce que** le point de liaison (9) et le point d'appui (10), vus dans une coupe verticale réalisée perpendiculairement au sens de la largeur (11) de la tête de récolte (1), présentent une distance (12) réciproque mesurée verticalement, et/ou une distance (13) réciproque mesurée horizontalement.

4. Tête de récolte (1) selon une des revendications précédentes, **caractérisée en ce que** le point d'appui (10) est placé sur le deuxième profilé de châssis (15).

5. Tête de récolte (1) selon la revendication 4, **caractérisée en ce que** le deuxième profilé de châssis (15) présente une section transversale rectangulaire.

6. Tête de récolte (1) selon une des revendications précédentes, **caractérisée en ce qu'**un profilé de châssis (14) du châssis (4), sur lequel est disposé le point de liaison (9), présente une section transversale rectangulaire ou ronde.

7. Tête de récolte (1) selon une des revendications précédentes, **caractérisée en ce que** le dispositif de récolte (5), au nombre d'au moins un, présente un module de transmission (17) qui comprend une transmission pour l'unité d'alimentation (7) et/ou l'unité de cueillage (8), l'appui du dispositif de récolte (5), au nombre d'au moins un, sur le châssis (4) s'effectuant par l'intermédiaire du module de transmission (17).

8. Tête de récolte (1) selon une des revendications précédentes, **caractérisée en ce que** le dispositif de récolte (5), au nombre d'au moins un, comprend une unité de hachage (18).

9. Moissonneuse-batteuse automotrice destinée à la récolte de plantes de maïs, comprenant une tête de récolte (1), qui est agencée pour la récolte de plantes de maïs (3), et une pluralité d'organes de travail destinés à traiter les épis de maïs cueillis sur les plantes de maïs (3),
**caractérisée en ce que**
la tête de récolte (1) est réalisée selon une des revendications 1 à 8.
